# EUROPEAN PATENT SPECIFICATION

(11) **EP 2 742 433 B1**
(45) Date of publication and mention of the grant of the patent: **24.07.2019**
(21) Application number: 12822525.7
(22) Date of filing: 09.08.2012
(51) Int. Cl.: G06F 15/82, H04L 29/08, G06F 15/173, G06F 16/957

(54) **SYSTEM AND METHOD FOR STORING INFORMATION ABOUT TRANSACTIONS OVER A NETWORK**
SYSTEM UND VERFAHREN ZUM SPEICHERN VON INFORMATIONEN ZU TRANSAKTIONEN ÜBER EIN NETZWERK
SYSTÈME ET PROCÉDÉ DE STOCKAGE D'INFORMATIONS CONCERNANT DES TRANSACTIONS SUR UN RÉSEAU

(30) Priority: 09.08.2011 US 201161521652 P
(43) Date of publication of application: 18.06.2014
(73) Proprietor: Openwave Mobility, Inc., Redwood City, CA 94063 (US)
(72) Inventor: SANDHU, Satinder, Fremont, CA 94555 (US); CHORDIA, Vishal, Redwood City, CA 94063-5731 (US)
(74) Representative: EIP
(86) International application number: PCT/US2012/050092
(87) International publication number: WO 2013/023028

(56) References cited:
- WO-A2-02/13479
- US-A1- 2010 094 878
- US-A1- 2010 106 577
- US-A1- 2011 167 156
- US-B1- 6 434 745

## Description

### Technical Field

The present invention relates to a system, method and a computer program product for storing information about transactions with one or more devices over a network.

### Background

It is known to collect and store information about transactions with one or more devices over a network. For example, data may be collected about internet usage for each of the devices. The stored data may then be analysed for a variety of purposes including customer profiling, personalized content recommendations, targeted advertising campaigns and multiple pricing tiers.

US-6,434,745 relates to web browsing software including a local event statistics database. A component of a browser monitors end user behaviour and maintains a local event statistics database. Each record in an events statistics file records information on a URL, title, last modified date and any keywords located in <META> tags in addition to data submitted by an HTML <FORM> and the date and time the event occurred. The data is transmitted to a web server and stored in a statistics database. The statistics database is then queried to obtain data sets and/or pre-formatted reports.

WO 02/13479 describes a network switch that determines when specific content is "hot" and directs packet flow to one or more cache servers instead of forwarding the packet to the origin servers. Data packets are received by the network switch and the URL is inspected. A URL database is built and a hit counter for each URL is maintained and updated.

Collecting information about all transactions carried out by every device on the network can be beneficial. In the case of a typical wireless communication network operator, there may be a very large number of subscribers, each with one or more individual devices, and each device may make many transactions every day. For example, viewing a typical web page will involve many transactions, one transaction for each element of the web page. This results in generation of a considerable amount of data, creating demands for large amounts of storage and requiring more processing power to analyse.

It has been proposed to reduce the amount of data by sampling the transactions so that only information on a subset of transactions is collected and stored. For example, between 10% and 0.001 % of transactions for each device or subscriber may be collected and stored. This reduces storage and processing requirements but limits how useful the transaction data is because it does not give a complete picture of all transactions.

It would be desirable to reduce the storage and processing requirements for information about transactions with devices over a network.

### Summary

In accordance with one aspect of the present invention, there is provided a system for intercepting and storing information relating to communications with at least one device over a network. The system comprises an interceptor configured to intercept at least some communications with the at least one device over a network, and a processing system. The processing system is configured to, for each intercepted communication, determine the type of content which is referenced by the intercepted communication using a file extension of a resource, which is referenced by a universal resource indicator, URI, comprised in the intercepted communication, and perform a storage action of a first type when the determined type of content is a page impression, wherein the storage action of the first type comprises storing at least part of the intercepted communication; and perform a storage action of a second type different to said first type when the determined type of content is not a page impression, wherein the storage action of the second type comprises incrementing a count of the number of intercepted communications.

Such a system can store different information about intercepted communications depending on whether the content type satisfies a criterion. Some content types are more useful for analysis than others, the system can therefore store less information for content types that are not as useful for analysis, reducing the storage required.

In accordance with another aspect of the present invention, there is provided a method of storing information relating to communications with at least one device over a network. The method comprises:
intercepting a communication with the at least one device;
determining the type of content which is referenced by the intercepted communication using a file extension of a resource, which is referenced by a universal resource indicator, URI, comprised in the intercepted communication; and
performing a storage action of a first type when the determined type of content is a page impression, wherein the storage action of the first type comprises storing at least part of the intercepted communication; and
performing a storage action of a second type different to said first type when the determined type of content is not a page impression, wherein the storage action of the second type comprises incrementing a count of the number of intercepted communications.

In accordance with a further aspect of the invention, there is provided a computer program product having computer program code for execution by a processing system embodied thereon, wherein the computer program code, when executed by the processing system, is operative to cause the processing system to execute the method of the above-described aspect.

Further features and advantages of the invention will become apparent from the following description of preferred embodiments of the invention, given by way of example only, which is made with reference to the accompanying drawings.

### Brief Description of the Drawings

Figure 1 is a diagrammatic representation of a network to which the system and method of the invention can be applied;
Figure 2 is a decision flow chart depicting the processing of the invention to determine what information to store about a network transaction; and
Figure 3 is a timing diagram showing an example of transaction flow in the network of Figure 1;
Figure 4 is a timing diagram showing a further example of transaction flow in the network of Figure 1; and
Figure 5 is a diagrammatic representation of how data volume can be reduced using a Base Summary Table.

### Detailed Description

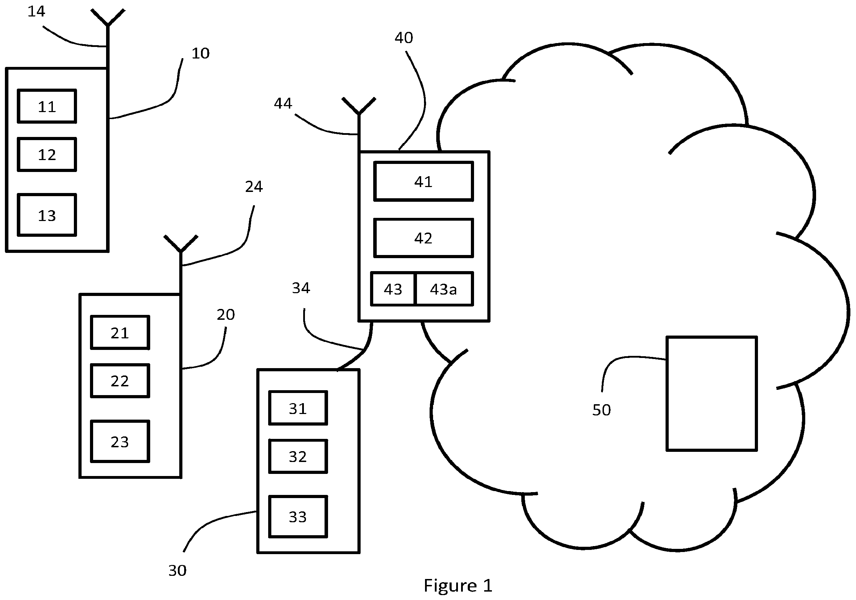

Figure 1 depicts a diagrammatic representation of an exemplary network in which the system and method of embodiments of the invention can be practiced. The network comprises a plurality of devices 10, 20, 30, a gateway 40 and an internet server 50.

The plurality of devices may comprise any mix of user equipment which is capable of communicating over a network. To give some non-limiting examples, the devices can be a computing device, such as a desktop, laptop or tablet computer; a telephony device such as a smart phone; or a consumer electronics device, such as a games console or television.

In Figure 1, three devices 10, 20, 30 are depicted for simplicity, although in other embodiments there can any number of devices. Each device 10, 20, 30 comprises a processor 11, 21, 31, storage 12, 22, 32 and a communications interface 12, 23, 33. Two of the devices 10, 20 also comprise an antenna 14, 24 for wireless communications. Device 30 comprises a wired communication interface for communication over connection 34. The connection 34 may be an electrical connection using a wire or a fibre-optic connection using an optical fibre.

The processor 11, 21, 31 can be an integrated circuit, for example a microprocessor, Application-Specific Integrated Circuit, Field Programmable Gate Array, System in package or System on chip. The storage 12, 22 and 32 stores instructions which are executed by the processor 11, 21, 31. It can be any form of non-transitory storage, for example flash memory, read-only memory, or magnetic storage such as a hard disk. The communications interface can be any suitable interface for communicating with other devices. For example as depicted for device 10, 20 it can be wireless interface, such as an interface conforming to one of the IEEE 802.11 standards or conforming to the GSM, UMTS or E-UTRA standards. Alternatively, or in addition, the communications interface can be a wired interface as depicted for device 30, for example an interface conforming to one of the IEEE 802.3 standards.

Devices 10, 20, 30 communicate with each other and other devices according to a format defined by a particular communications protocol; such communications are referred to herein as transactions. For example, the devices 10, 20, 30 can communicate using Hyper-Text Transfer Protocol (HTTP), and such communications are referred to herein as HTTP transactions. A mixture of different protocols can be used by the devices 10, 20, 30. The following description will consider HTTP transactions but the invention can be applied to any data transaction over a network and is not limited to the HTTP protocol.

All transactions with the devices 10, 20, 30 pass through the gateway 40. The gateway 40 provides an interface to other devices on the network or on a remote network, for example the internet server 50. Although this description refers to a gateway 40, the invention can be applied to any device that can intercept communications from a device. The gateway comprises a processor 41, storage 42, a communications interface 43, an antenna 44 and a wired interface for communication over connection 34.

The processor 41 can be an integrated circuit, for example a microprocessor, Application-Specific Integrated Circuit, Field Programmable Gate Array, System in package or System on chip. The storage 42 stores instructions which are executed by the processor 41. It can be any form of non-transitory storage, for example flash memory, read-only memory, or magnetic storage such as a hard disk. In this embodiment, storage 42 can also store information related to intercepted transactions, which is described in more detail below. In alternate embodiments, storage for information related to intercepted transactions can be provided external to the gateway 40. The communications interface 43 can be any suitable interface for communicating with other devices. For example, it can allow wireless communication via the antenna 44, such as by conforming to one of the IEEE 802.11 standards or conforming to the GSM, UMTS or E-UTRA standards. Alternatively, or in addition, the communications interface can be a wired interface for communication over connection 34, for example an interface conforming to one of the IEEE 802.3 standards. The communications interface 43 also allows communication with remote devices, such as internet server 50. To support this communication, the gateway 40 may convert transactions between protocols depending on the underlying networks. Within the communications interface 43 is an interceptor 43A configured to intercept all communications that pass through the gateway 40.

Internet server 50 may be any internet connected device, in this embodiment it is a World Wide Web server providing pages of information using HTTP.

The gateway 40 is configured to store information on HTTP transactions made by the devices 10, 20, 30. All HTTP transactions pass through the gateway 40 and are preferably intercepted by the interceptor 43a, although in some embodiments fewer than all transactions can be intercepted. Intercepted transactions are then processed by the processor 41 to determine their content type. Depending on whether the determined content type satisfies a criterion, different information about the transaction is stored. For example, if the determined content type satisfies the criterion a storage action of a first type may be carried out. If the determined content type does not satisfy the criterion a storage action of a second type, different to the first type may be carried out. The storage action of the first type can store more information than the storage action of the second type. This enables more information to be stored about the transactions which are most useful for later analysis and less information stored about other transactions, so that information about many transactions, possibly all transactions, can be stored with less storage requirement.

In an embodiment, the processor 41 of the gateway is arranged to store at least part of the intercepted transaction as the storage action of the first type and/or to increment a count of the number of intercepted transactions as the storage action of the second type. For transactions which are useful for later analysis, such as page impressions, at least part of the intercepted transaction can be stored using the storage action of the first type. (A page impression can also be referred to as a page view and refers to a request for a single page of information. After a request for a page impression has been made there may be further requests for content, such as images, required to render the page. These further requests for content are not a page impression. In the context of HTTP, a page impression is a request to load single HTML file.) For transactions which are less useful for later analysis, a count of the number of those transactions can be incremented using the storage action of the second type. This minimises the storage requirements for what may be many transactions. Less useful transactions may be any transaction which is not a page impression, or relate to specific content types such as an image, audio, video or advertisements.

The intercepted transaction will typically comprise a Uniform Resource Indicator (URI), for example a HTTP transaction comprises a URI. The processor can then be further arranged to store at least part of the URI as the storage action of the first type and/or to increment a count of the number of intercepted transactions relating to a domain referenced in the URI as the storage action of the second type. Although all the Uniform Resource Indicator (URI) in the HTTP transaction may be stored, it can be beneficial to store only part of the URI and thereby further reduce storage space required. In one embodiment only part of the URI is stored in the form of a trimmed URI. Trimmed URIs are formed by removing portions of the URI to the right of a predetermined number of the first "/" characters in the URI, such as the first 1, 2 or 3 "/" characters. To give an example, the URI www.example.com/index/test/page.html would be trimmed as follows:
www.example.com/ if only the first "/" is considered.
www.example.com/index/ if the first two "/" are considered.
www.example.com/index/test if the first three "/" are considered.

For content types where a count of the number of intercepted transactions is maintained using the storage action of the second type, the count may be stored for each determined type of content or aggregated for more than one determined type of content.

In an embodiment, exceptions to the manner in which transactions are stored can be specified. For example, if the intercepted transaction comprises a Uniform Resource Indicator (URI), before determining the type of content, the processor may determine whether at least a part of the URI is on a predetermined list. If it is determined that at least a part of the URI is on the predetermined list, at least part of the URI is stored regardless of whether the content type satisfies the criterion. This allows exceptions to be made for particular domains or URIs where all content types are more useful for analytics than elsewhere. For example information, in relation to streaming, audio transactions may be more useful from a broadcaster's website than from a general website that streams background music while a user views the website.

The predetermined list may define the part of the URI which is stored, for example the number of "/" characters considered to form a trimmed URI for storage. In that case it can be advantageous to define a list of exceptions to the rules in the predetermined list regarding which part of the URI stored. In an embodiment, the processor can be further arranged to, if it is determined that at least part of the URI is on the predetermined list, determine whether at least a part of the URI is also on a predetermined exception list; and if it is determined that at least part of the URI is also on the predetermined exception list, store a part of the URI which is defined by the predetermined exception list. This gives the user fine control over how information on transactions is stored in the system to ensure that maximum information about useful transactions is stored while reducing storage requirements.

To assist in analysis of the information collected, each device 10, 20, 30 has an associated unique identifier. This can be, for example, an International Mobile Subscriber Identity (IMSI), an International Mobile Equipment Identity (IMEI), an Internet Protocol (IP) address or a Media Access Control (MAC) address. The processor is then further arranged to store the unique identifier with the information about the intercepted transaction.

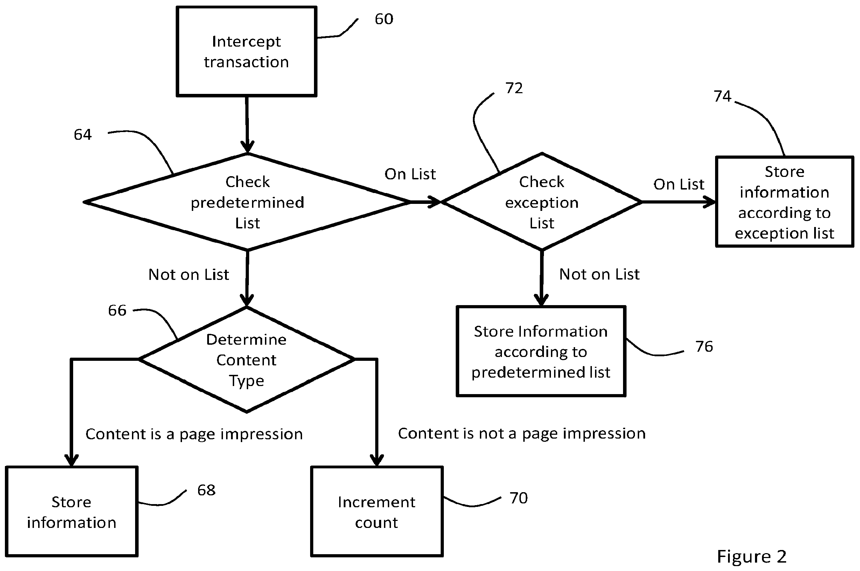

An embodiment of the method implemented by the processor 41 to identify and store information on intercepted transactions will now be described with reference to Figure 2. First, the interceptor 43a intercepts a transaction at step 60. In this embodiment the intercepted transaction is a HTTP transaction containing a URI. The intercepted transaction is passed to the processor 40 for analysis and to determine how information relating to the transaction is stored.

Next, at step 64, the processor checks the URI against a predetermined list of URIs or parts of URIs for which more detailed information should always be stored. For example the list may include particular domains for which more detailed information should always be stored. If it is determined that the URI is not on the predetermined list, execution proceeds to step 66, otherwise execution proceeds to step 72.

At step 66, the processor determines the content type referenced by the transaction. For example, the processor may examine the URI and consider the file extension of a resource referenced by the URI to determine the content type. This determined content type is then checked to see whether it satisfies a criterion. In this embodiment the criterion is whether the content type is a page impression. If the content type is determined to be a page impression, for example by having a file extension ".html", execution proceeds to step 68, otherwise execution proceeds to step 70.

When the determined content type of the transaction is a page impression, the processor stores information relating to the transaction using a storage action of a first type at step 68. A trimmed URI is formed from the URI in the intercepted transaction and stored together with a unique identifier for the device associated with the content request.

When the determined content type is other than a page impression, for example an image or audio format, a count of the number of transactions is incremented at step 70 using a storage action of a second type. Different embodiments may implement different levels of information for the counts stored of these content types. For example, an aggregate count for all transactions may be maintained, a count per domain may be maintained or a count per content type may be maintained (which may itself be aggregated or recorded per domain in the URI). Maintaining a count of these content types allows information on more transactions to be stored with reduced storage space.

If it is determined at step 64 that the URI of the transaction is on the predetermined list, execution proceeds to step 72 and the content type is not considered. The predetermined list enables a user to supply a list of URIs for which more detailed information is always stored regardless of content type. The predetermined list also contains data on what information should be stored for transactions with a URI matching the list.

At step 72 a predetermined list of exceptions to the first list is checked. This allows a user to define additional exceptions to the way information is stored, for example for a subdomain or particular address within the overall URI in the predetermined list. If it is determined that a transaction is on the list of exceptions, execution proceeds to step 74, otherwise execution proceeds to step 76.

At step 74, information relating to the transaction is stored according to instructions in the second list of exceptions. For example a storage action of the first type may be used to store a trimmed URI is formed according to instructions in the list of exceptions. Otherwise, at step 76, information relating to the transaction is stored according to the instructions in the predetermined list. For example a storage action of the first type may be used to store a trimmed URI according to instructions in the predetermined list.

In another embodiment, the checking of the predetermined list at step 64 is omitted and information about all intercepted transactions is stored according to the determined content type at step 66. In a further embodiment, the checking of the predetermined list at step 64 may be included but the checking of the exception list at step 72 is omitted.

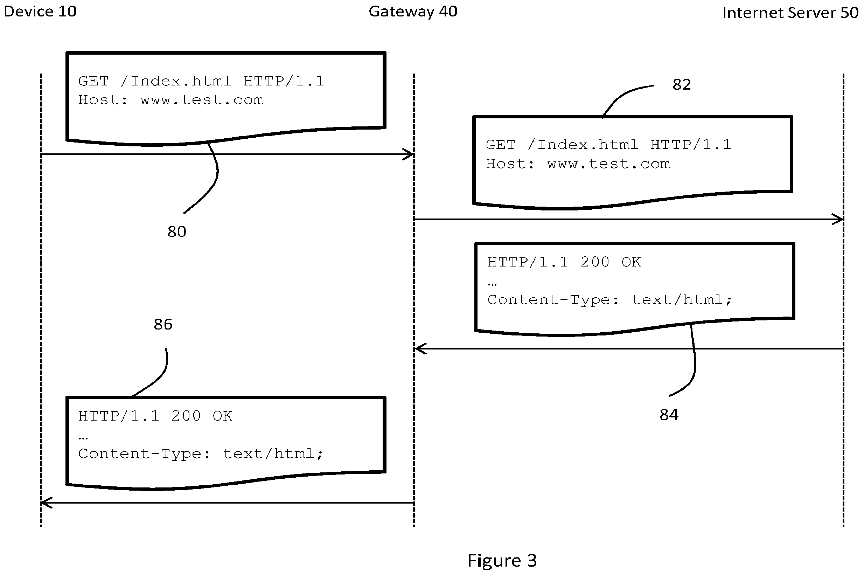

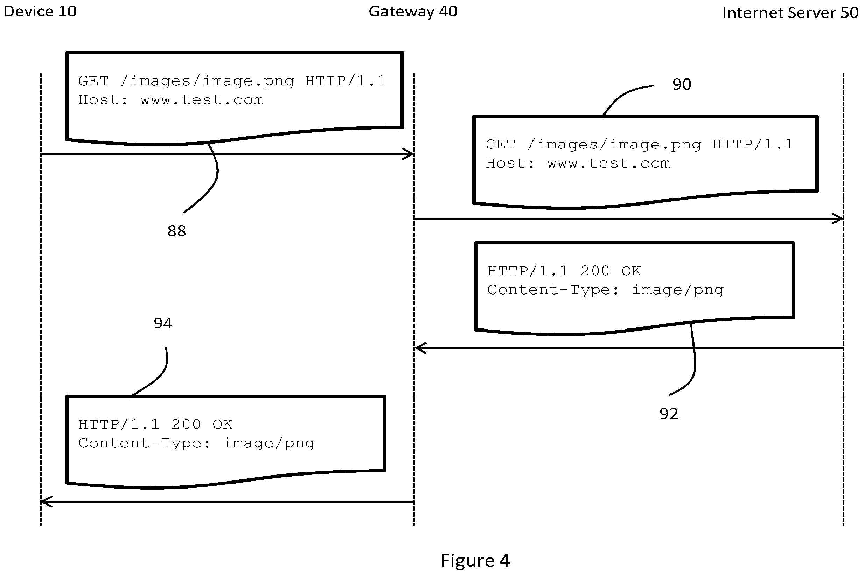

An embodiment will now be described in the context of HTTP transactions between a device 10 and the internet server 50, with reference to Figures 3 and 4. In this embodiment a user of the device wishes to view a World Wide Web page. As a result the process is described as initiated by a request from the device 10. However, alternative embodiments can be applied to so called "push" notifications which are originated by the internet server 50. As noted above, alternative embodiments can be applied to transactions using other protocols, because the invention is not limited to HTTP.

The device 10 sends a HTTP request at step 80. The request includes a URI indicating the address of the internet server 50 and the content on the internet server 50 which is requested. For example, if the internet server has an address www.test.com, the request may include the following in the HTTP header:

```
               GET /index.html HTTP/1.1 <CR><LF>
               Host: www.test.com <CR><LF>
```

Other fields may be included in the HTTP header but are omitted for clarity in this example. The HTTP request is then intercepted by the gateway 40 on its route to the internet server 50. The gateway 40 processes the transaction according to the method described above with reference to Figure 2 and forwards the HTTP request on for routing to the internet server 50 at step 82

The gateway 40 processes the transaction to determine whether the URI in the HTTP request matches the predetermined list (step 64 in Figure 2). The URI may be checked for a match with the predetermined list on the basis of the fields in the HTTP header of the HTTP request or based on other routing information associated with the HTTP request. For the purposes of this example, the URI does not match the predetermined list so the gateway 40 then determines the content type (step 66 in Figure 2). The content type may be determined directly from the HTTP request, for example the file extension of the requested resource. In this case the content type can be determined as a page impression from the ".html" file extension. As a result information about the transaction is stored using a storage action of the first type, for example as a trimmed URI (step 68 in Figure 2).

Meanwhile, the HTTP request is received and processed by the internet server 50. A HTTP response is formed and sent to the device 10 at step 84. For example the response may include the following in the HTTP header

```
               HTTP/1.1 200 OK <CR><LF>
               Content-Type: text/html; charset=UTF-8 <CR><LF>
```

Other fields may be included in the HTTP header of the response, but these are omitted for clarity.

The response from the internet server 50 is also intercepted by the gateway before being forwarded to the device 10 at step 86. The gateway can then process the response for potential storage according to the method described above. Alternatively, in another embodiment, the gateway may choose to ignore the response and not store it because to some extent the information will duplicate information already stored on the basis of the request. In a further embodiment, the response may be checked to verify the content type determined for the request by examining the "Content-Type" field in the header of the response.

When the response is received by the device 10, software running on the device interprets the HTML content to render the page for viewing. The HTML content will normally include references to additional resources on the server 50 for the display on the page, such as images. The HTML content may also reference content on other servers, for example advertisements.

There may be many several content elements to be fetched to enable the entire page to be rendered. Figure 4 depicts an example of processing for one further content element, but there is no limitation on the number of additional elements that can be requested. In this example, the page requires an image file "/images/image.png". An HTTP request for this file is formed by the device and transmitted to the internet server 50 at step 88. The request includes a URI indicating the address of the internet server 50 and the content on the internet server 50 which is requested. As this follows from the example of Figure 3, the internet server has an address www.test.com and the request may include the following in the HTTP header:

```
               GET /images/image.png HTTP/1.1 <CR><LF>
               Host: www.test.com <CR><LF>
```

Other fields may be included in the HTTP header but are omitted for clarity in this example. The HTTP request is then intercepted by the gateway 40 on its route to the internet server 50. The gateway 40 processes the transaction according to the method described above with reference to Figure 2 and forwards the HTTP request on for routing to the internet server 50 at step 90.

The gateway 40 processes the transaction to determine whether the URI in the HTTP request matches the predetermined list (step 64 in Figure 2). The URI may be checked on the basis of the fields in the HTTP header of the HTTP request or based on other routing information associated with the HTTP request. As discussed above for Figure 3, in this example, the URI does not match the predetermined list and so the gateway 40 then determines the content type (step 66 in Figure 2). The content type may be determined directly from the HTTP request, for example the file extension of the requested resource. In this case the content type can be determined as an image from the ".png" file extension. As a result a count is incremented using a storage action of the second type and no further information is stored (step 70 in Figure 2).

Meanwhile, the HTTP request is received and processed by the internet server 50. A HTTP response is formed and sent to the device 10 at step 92. For example the response may include the following in the HTTP header

```
               HTTP/1.1 200 OK <CR><LF>
               Content-Type: image/png <CR><LF>
```

Other fields may be included in the HTTP header of the response, but these are omitted for clarity.

The response from the internet server 50 is also intercepted by the gateway before being forwarded to the device 10 at step 94. The gateway can then process the response for potential storage according to the method described above. Alternatively, the gateway may choose to ignore the response and not store it because to some extent the information will duplicate information already stored on the basis of the request. In a further embodiment, the response may be checked to verify the content type determined for the request by examining the "Content-Type" field in the header of the response.

When the response is received by device 10 it is rendered on the page for viewing. There are likely to be many more transactions to display a single web page. However, for the purpose of analysis these are generally less useful than information of the page impression itself.

The examples of Figures 3 and 4 described above show how the method of the invention can be used to store different information about transactions depending on the content type referenced in the transaction. This reduces storage while retaining the more detailed information about the most useful content types for later analysis.

Embodiments of the invention may involve use of a database schema, with tables defining how different content types should be stored. An embodiment of one such schema will now be explained.

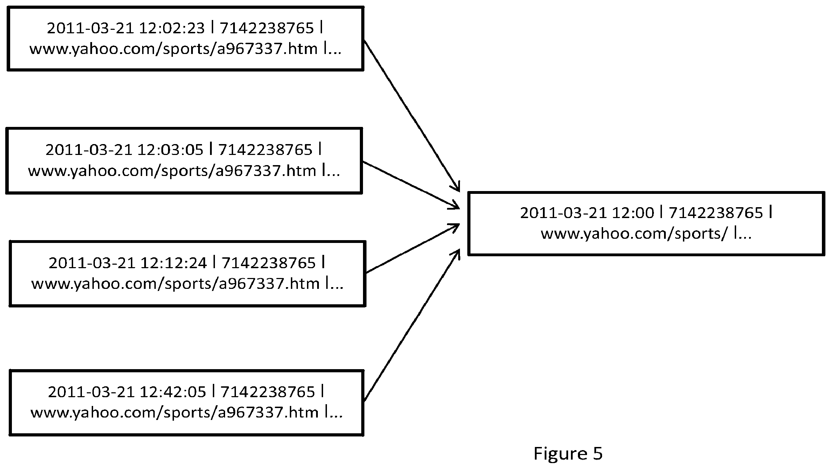

This embodiment saves data on transactions made by devices in an optimised Base Summary Table (BST). A BST is a data compression technique where, for a given device or subscriber, records with a common value (URI) are combined in a period of time. This reduces rows stored for that given period of time. The BST technique can be applied over different levels of temporal granularity: hourly, daily, monthly quarterly, yearly. Each successive level provides further data compression. While the BST does result in loss of full URI tracking, meaningful parts of the URI are preserved for analysis. Use of the BST at greater levels of granularity preserves basic reporting capability over longer periods of time with reduced storage impact. Figure 5 depicts how a BST can combine four transactions accessing the same page over the space of an hour into a single record.

Use of a BST can reduce data storage but it is not suitable for reducing the storage of all transactions. In particular, scripted or active content may have a constantly changing URI, or the URI may change every time a site is accessed. Transactions related to display of advertisements also tend to use unique URIs to allow for user and campaign tracking. For such data the BST cannot reduce the volume of data so effectively.

In this embodiment, entries are made in the BST dependent on the content type referenced in a transaction. The BST only stores page impression transactions as a trimmed URI. All non-page impressions are stored at domain level only, for example as a count of the number of transactions for a particular content type within the domain.

A predetermined list (white list) table is implemented allowing a user to define exceptions to the rule of storing non-page impressions at domain level. Any URI listed in predetermined list is stored as a trimmed URI in the optimized BST, regardless of the content-type. The predetermined list also allows a user to specify the level of trimmed URI for the domains it includes. By default all URIs will be trimmed up to 2 levels. A user can add exceptions to the level rule by specifying a domain and level between 1 and 3 in the predetermined list. A URI level is defined as the content of the URI from the start up to the first "/" encountered. Similarly the 2nd level URI will be from the start to the second "/" encountered and so on.

An exceptions list (black list) may be provided to provide exceptions to the generic URIs on the predetermined list. For example, if a domain is listed in the predetermined list table to have a level of 3 by default, a user can add a list of URIs for that domain to the exceptions list to make exceptions to the predetermined list rule.

This embodiment enables an optimised Base Summary Table (BST) to be defined based on four tables:
1. BST configuration: This stores the general configuration to generate the BST. For example it can define a parameter "Store only page impressions" which is defaulted to "Yes". If the parameter is "No" then the BST configuration can specify how each content type should be stored.
2. Content configuration: This stores the content definition data which includes information like patterns to help identify content. In this embodiment, only the contents provided in this table will have an entry in the BST.
3. Predetermined List (White List): This stores a list of URIs and domains and allows a user to set the detail level up to which these will be stored in the BST as a trimmed URI.
4. Exceptions List (Black List): This stores a list of URIs which will allow exceptions to URIs on the predetermined list.

The structure of these tables will now be described in turn.

The BST configuration table is called BST_CONFIG_TBL and has a structure which is defined in Table 1 below.

**Table 1 - BST configuration table structure**

| **Column Name** | **Data Type** | **Comment** |
|---|---|---|
| OPTION_NAME | STRING | This stores the option for the BST, the values are provided in the next column |
| OPTION_VALUE | STRING | Valid values are "Y" for yes and "N" for no. |
| DATE_ADDED | DATE | Stores the date when this record was added. |
| EFFECTIVE_DATE | DATE | Stores the date when this record will be effective. This date will always be the current date + 1. This value cannot be set to the current date or in the past. |
| EXPIRY_DATE | DATE | Stores the date when the values for this record expire |

The values in the BST configuration table will impact the processing behaviour to generate the BST aggregated on global basis. It has the largest effect on the storage and processing power required for the BST. In this embodiment, the allowed OPTION_NAME settings are:
- "Store only page impressions at trimmed level". Possible values for this option are 'Y' and 'N'. The default value for this option will be 'Y'. Setting it to 'Y' means that all non-page impression data will be stored at domain level only as an incremented count and individual URIs will not be stored in the BST. Only page impressions are stored as a trimmed URI in the BST.
- "Store non-page impressions at content level". Possible values for this option are 'Y' and 'N', the default value is 'N'. This option allows the user to choose whether to store data at domain level or content level. For example if this option is set to 'Y' then all the images for a particular domain are stored in a single row in the BST with CONTENT_TYPE set to 'IMAGE'. On the other hand, if this option is set to 'N' then all the image transactions will be stored as a single row with CONTENT_TYPE set to 'ALL' and will be grouped with other non-page impression content types.

To maintain consistency of data across a day the BST aggregate will only consider the records with EFFECTIVE_DATE set to date equal or less than processing date and EXPIRY_DATE set to equal or greater than the current processing date.

The content configuration table is called BST_CONTENT_CONFIG_TBL and has a structure as set out in Table 2 below. This table is a Slowly Changing Data Type 2 (SCD2) table.

**Table 2 - Content configuration table structure**

| **COLUMN_NAME** | **DATA TYPE** | **COMMENT** |
|---|---|---|
| CONTENT_NAME | STRING | Name of the CONTENT. For example, IMAGE, AUDIO, etc. |
| DATA_SOURCE | STRING | Source of data for this content definition. Valid values are TABLE and PATTERN |
| SOURCE_NAME | STRING | Valid values for this are either a database reference table name, or a valid PATTERN like "%apk" |
| DATE_ADDED | DATE | Stores the date when this record was added |
| EFFECTIVE_DATE | DATE | Stores the date when this record will be effective. This date will always be the current date + 1. This value cannot be set to the current date or in the past. |
| EXPIRY_DATE | DATE | Stores the date when the values for this record expire. |

This table will store the definition of contents used by the BST. The source of the contents used by the BST can either be defined in another database table, or directly in the BST_CONTENT_CONFIG_TBL by providing patterns. In one embodiment a user may wish to track app downloads separately, this can be added to the BST_CONTENT_CONFIG_TBL.

To maintain consistency of data across a day, the BST aggregate will only consider the records with EFFECTIVE_DATE set to date equal or less than processing date and EXPIRY_DATE set to equal or greater than the current processing date.

The predetermined list table is called BST_WHITE_LIST_TBL and has a structure set out in Table 3 below. This an SCD2 table.

**Table 3 - Predetermined list table structure**

| **COLUMN_NAME** | **DATA TYPE** | **COMMENT** |
|---|---|---|
| URI_TYPE | STRING | The type of URI. Valid values are "F" for full and "D" for domain only |
| URI_KEY | NUMBER | Stores the key identifier for URI values, which will be maintained in another database table. This can be the URI_KEY for the domain if the key for the full URI does not exist in the URI Values table. |
| URI | STRING | Stores the actual Full URI or domain |
| TRIM_LEVEL | NUMBER(1) | Valid values are 1 to 3. Default value is 2. This column is only valid when URI TYPE is set to "D" and is set to 0 when the URI TYPE is set to "F". |
| DATE_ADDED | DATE | Stores the date when this record was added |
| EFFECTIVE_DATE | DATE | Stores the date when this record will be effective. This date will always be the current date + 1. This value cannot be set to the current date or in the past. |
| EXPIRY_DATE | DATE | Stores the date when the values for this record expire. |

To maintain consistency of data across a day, BST aggregate will only consider the records with EFFECTIVE_DATE set to date equal or less than processing date and EXPIRY_DATE set to equal or greater than the current processing date.

The exceptions list table is called BST_BLACK_LIST_TBL and has the structure set out in Table 4 below. It is a SCD2 table.

**Table 4 - Exceptions list table structure.**

| **COLUMN NAME** | **DATA TYPE** | **COMMENT** |
|---|---|---|
| URI_KEY | NUMBER | Stores the URI KEY from the URI Values table. This will be the URI KEY for the domain |
| URI | STRING | Stores the actual URI |
| DATE_ADDED | DATE | Stores the date when this record was added |
| EFFECTIVE_DATE | DATE | Stores the date when this record will be effective. This date will always be the current date + 1. This value cannot be set to the current date or in the past. |
| EXPIRY_DATE | DATE | Stores the date when the values for this record expire. |

The exceptions list is only valid for URIs contained in the predetermined list table and for which URI_TYPE is set to 'D'. For example, a user can define in the predetermine list that all transactions should be stored for a domain abc.com with trimming of up to 3 levels, and can then use the exceptions list to make exceptions to that rule. Preferably URIs in the Exceptions list are recorded without trimming.

The exceptions list cannot be used for URIs on the predetermined list for which URI_TYPE is set to 'F'.

To maintain consistency of data across a day, BST aggregate will only consider the records with EFFECTIVE_DATE set to date equal or less than processing date and EXPIRY_DATE set to equal or greater than the current processing date.

The embodiments described above provide various advantages when it is desired to store data of transactions with devices over a network, for example HTTP transactions. It has been found that than 50% of the transactions are non-page impressions, for example images and advertisements. Images and especially advertisements have short life span and tend to change hourly or even at a faster rate. This can lead to data inflation if information of the non-page impression transactions is stored as a URI or trimmed URI. Non-page impressions have limited analytical value at trimmed level and can be stored at domain level because most of the time the analyst is interested in Total Volume, Number of transactions and other high level statistics generated by these transactions. Thus while the storage required for information on the transactions is reduced, this also has the benefit of reducing the processing required because smaller data sets are easier to process. The amount of data stored in an embodiment can be 90% less than storing a URI without considering the content type.

The embodiments enable data on a very high proportion of transactions to be saved with reduced storage space and processing requirements. For example, 100% of transactions may be stored for later analysis. This gives a more complete view of the data than prior methods of reducing storage space, such as sampling. With sampling only a fraction, perhaps as small as 0.001%, of transactions are stored for later analysis.

The above embodiments are to be understood as illustrative examples of the invention. Further embodiments of the invention are envisaged. For example, some embodiments may further reduce storage space required by combining similar transactions into a single record and storing the differences between the transactions (for example search words, advertisement IDs and campaign IDs) in a separate data store.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A system for intercepting and storing information relating to communications with at least one device (10, 20, 30) over a network, the system comprising:
an interceptor (43a) configured to intercept at least some communications with the at least one device over a network; and
a processing system (41) arranged to, for each intercepted communication:
determine (66) the type of content which is referenced by the intercepted communication using a file extension of a resource, which is referenced by a Universal Resource Indicator, URI, comprised in the intercepted communication; and
perform a storage action of a first type when the determined type of content is a page impression, wherein the storage action of the first type comprises storing (68) at least part of the intercepted communication; and
perform a storage action of a second type different to the first type when the determined type of content is not a page impression, wherein the storage action of the second type comprises incrementing (70) a count of the number of intercepted communications.

2. The system of claim 1, wherein the storage action of the first type comprises storing at least part of the URI and the storage action of the second type comprises incrementing a count of the number of intercepted transactions relating to a domain referenced in the URI.

3. The system of claim 1 or 2, wherein the storage action of the second type comprises incrementing a count of the number of intercepted communications of the determined type of content.

4. The system of any one of the preceding claims, wherein if the determined type of content is an image, audio, video, advertisement or search request, the determined type of content is not a page impression, and the processor performs said storage action of the second type.

5. The system of any one of the preceding claims, wherein the processor is further arranged to, before determining the type of content:
determine (64) whether at least a part of the URI is on a predetermined list; and
if it is determined that at least a part of the URI is on the predetermined list, perform a storage action of the first type.

6. The system according to any one of the preceding claims, wherein the at least one device has a unique identifier, and wherein the processor is further arranged to store the unique identifier in the storage action of the first type and the storage action of the second type.

7. A method of storing information relating to communications with least one device (10, 20, 30) over a network; the method comprising:
intercepting a communication with the at least one device;
determining (66) the type of content which is referenced by the intercepted communication using a file extension of a resource, which is referenced by a Universal Resource Indicator, URI, comprised in the intercepted communication; and
performing a storage action of a first type when the determined type of content is a page impression, wherein the storage action of the first type comprises storing (68) at least part of the intercepted communication; and
performing a storage action of a second type different to the first type when the determined type of content is not a page impression, wherein the storage action of the second type comprises incrementing (70) a count of the number of intercepted communications.

8. The method of claim 7, wherein the storage action of the first type comprises storing at least part of the URI and the storage action of the second type comprises incrementing a count of the number of intercepted transactions relating to a domain referenced in the URI.

9. The method of claim 7 or 8, wherein the storage action of the second type comprises incrementing a count of the number of intercepted communications of the determined type of content.

10. The method of any one of claims 7 to 9, wherein if the determined type of content is an image, audio, video, advertisement or search request, the determined type of content is not a page impression, and a storage action of the second type is performed.

11. The method of any one of claims 7 to 10, wherein the method further comprising, before determining the type of content:
determining (64) whether at least a part of the URI is on a predetermined list; and
if it is determined that at least a part of the URI is on the predetermined list, performing a storage action of the first type.

12. The method according to any one of claims 7 to 11, wherein the at least one device has a unique identifier, the method further comprising storing the unique identifier in the storage action of the first type and the storage action of the second type.

13. A computer program product having computer program code for execution by a processing system embodied thereon, wherein the computer program code, when executed by the processing system, is operative to cause the processing system to execute the method of any one of claims 7 to 12.

## Patentansprüche

1. System zum Abfangen und Speichern von Informationen betreffend Kommunikationen mit mindestens einer Vorrichtung (10, 20, 30) über ein Netzwerk, wobei das System umfasst:
einen Abfänger (43a), eingerichtet, um mindestens einige Kommunikationen mit der mindestens einen Vorrichtung über ein Netzwerk abzufangen; und
ein Verarbeitungssystem (41), eingerichtet, um für jede abgefangene Kommunikation:
die Art des Inhalts zu bestimmen (66), der von der abgefangenen Kommunikation in Bezug genommen wird unter Verwendung einer Dateierweiterung einer Ressource, die mittels eines Universalressourcenindikators, URI, in Bezug genommen wird, umfasst in der abgefangenen Kommunikation; und
Durchführen einer Speicheraktion einer ersten Art, wenn die bestimmte Art des Inhalts ein Seitenaufruf ist, wobei die Speicheraktion der ersten Art Speichern (68) von mindestens einem Teil der abgefangenen Kommunikation umfasst; und
Durchführen einer Speicheraktion einer zweiten Art verschieden von der ersten Art, wenn die bestimmte Art des Inhalts kein Seitenaufruf ist, wobei die Speicheraktion der zweiten Art Inkrementieren (70) einer Zählung der Anzahl von abgefangenen Kommunikationen umfasst.

2. System nach Anspruch 1, wobei die Speicheraktion der ersten Art Speichern von mindestens einem Teil der URI umfasst und die Speicheraktion der zweiten Art Inkrementieren einer Zählung der Anzahl von abgefangenen Transaktionen betreffend eine Domain, die in der URI in Bezug genommen wird, umfasst.

3. System nach Anspruch 1 oder 2, wobei die Speicheraktion der zweiten Art Inkrementieren einer Zählung der Anzahl der abgefangenen Kommunikationen der bestimmten Art des Inhalts umfasst.

4. System nach einem der vorstehenden Ansprüche, wobei, falls die bestimmte Art des Inhalts ein Bild, Audio, Video, Werbung oder Suchanfrage ist, die bestimmte Art des Inhalts kein Seitenaufruf ist und der Prozessor die Speicheraktion der zweiten Art durchführt.

5. System nach einem der vorstehenden Ansprüche, wobei der Prozessor weiter eingerichtet ist, um vor dem Bestimmen der Art des Inhalts:
zu bestimmen (64), ob mindestens ein Teil der URI auf einer vorbestimmten Liste ist; und
falls bestimmt wird, dass mindestens ein Teil der URI auf der vorbestimmten Liste ist, eine Speicheraktion der ersten Art durchzuführen.

6. System nach einem der vorstehenden Ansprüche, wobei die mindestens eine Vorrichtung einen eindeutigen Identifikator hat, und wobei der Prozessor weiter eingerichtet ist, um den eindeutigen Identifikator in der Speicheraktion der ersten Art und der Speicheraktion der zweiten Art zu speichern.

7. Verfahren zum Speichern von Information betreffend Kommunikationen mit mindestens einer Vorrichtung (10, 20, 30) über ein Netzwerk; wobei das Verfahren umfasst:
Abfangen einer Kommunikation mit der mindestens einen Vorrichtung; Bestimmen (66) der Art des Inhalts, der von der abgefangenen Kommunikation in Bezug genommen wird unter Verwendung einer Dateierweiterung einer Ressource, die mittels eines Universalressourcenindikators, URI, in Bezug genommen wird, umfasst in der abgefangenen Kommunikation; und
Durchführen einer Speicheraktion einer ersten Art, wenn die bestimmte Art des Inhalts ein Seitenaufruf ist, wobei die Speicheraktion der ersten Art Speichern (68) von mindestens einem Teil der abgefangenen Kommunikation umfasst; und
Durchführen einer Speicheraktion einer zweiten Art verschieden von der ersten Art, wenn die bestimmte Art des Inhalts kein Seitenaufruf ist, wobei die Speicheraktion der zweiten Art Inkrementieren (70) einer Zählung der Anzahl von abgefangenen Kommunikationen umfasst.

8. Verfahren nach Anspruch 7, wobei die Speicheraktion der ersten Art Speichern von mindestens einem Teil der URI umfasst und die Speicheraktion der zweiten Art Inkrementieren einer Zählung der Anzahl von abgefangenen Transaktionen betreffend eine Domain, die in der URI in Bezug genommen wird, umfasst.

9. Verfahren nach Anspruch 7 oder 8, wobei die Speicheraktion der zweiten Art Inkrementieren einer Zählung der Anzahl der abgefangenen Kommunikationen der bestimmten Art des Inhalts umfasst.

10. Verfahren nach einem der Ansprüche 7 bis 9, wobei, falls die bestimmte Art des Inhalts ein Bild, Audio, Video, Werbung oder Suchanfrage ist, die bestimmte Art des Inhalts kein Seitenaufruf ist und eine Speicheraktion der zweiten Art durchführt wird.

11. Verfahren nach einem der Ansprüche 7 bis 10, wobei das Verfahren weiter umfasst vor dem Bestimmen der Art des Inhalts:
Bestimmen (64), ob mindestens ein Teil der URI auf einer vorbestimmten Liste ist; und
falls bestimmt wird, dass mindestens ein Teil der URI auf der vorbestimmten Liste ist, Durchführen einer Speicheraktion der ersten Art.

12. Verfahren nach einem der Ansprüche 7 bis 11, wobei die mindestens eine Vorrichtung einen eindeutigen Identifikator hat, und wobei das Verfahren weiter Speichern des eindeutigen Identifikators in der Speicheraktion der ersten Art und der Speicheraktion der zweiten Art umfasst.

13. Computerprogrammprodukt, das Computerprogrammcode zur Ausführung mittels eines Verarbeitungssystems darauf verkörpert hat, wobei der Computerprogrammcode, wenn er mittels des Verarbeitungssystems ausgeführt wird, bewirkt, das Verarbeitungssystem zu veranlassen, das Verfahren nach einem der Ansprüche 7 bis 12 auszuführen.

## Revendications

1. Système pour intercepter et mémoriser une information concernant des communications avec au moins un dispositif (10, 20, 30) sur un réseau, le système comprenant :
un intercepteur (43a) configuré pour intercepter au moins certaines communications avec l'au moins un dispositif sur un réseau ; et
un système de traitement (41) conçu, pour chaque communication interceptée, pour :
déterminer (66) le type de contenu qui est référencé par la communication interceptée à l'aide d'une extension de fichier d'une ressource, qui est référencée par un indicateur de ressource universel, URI, inclus dans la communication interceptée ; et
effectuer une action de mémorisation d'un premier type lorsque le type de contenu déterminé est une impression de page, l'action de mémorisation du premier type comprenant la mémorisation (68) d'au moins une partie de la communication interceptée ; et
effectuer une action de mémorisation d'un deuxième type différent du premier type lorsque le type de contenu déterminé n'est pas une impression de page, l'action de mémorisation du deuxième type comprenant l'incrémentation (70) d'un compte du nombre de communications interceptées.

2. Système selon la revendication 1, dans lequel l'action de mémorisation du premier type comprend la mémorisation d'au moins une partie de l'URI et l'action de mémorisation du deuxième type comprend l'incrémentation d'un compte du nombre de transactions interceptées associées à un domaine référencé dans l'URI.

3. Système selon la revendication 1 ou 2, dans lequel l'action de mémorisation du deuxième type comprend l'incrémentation d'un compte du nombre de communications interceptées du type de contenu déterminé.

4. Système selon l'une quelconque des revendications précédentes, dans lequel, si le type de contenu déterminé est une image, une audio, une vidéo, une publicité ou une demande de recherche, le type de contenu déterminé n'est pas une impression de page, et le processeur effectue ladite action de mémorisation du deuxième type.

5. Système selon l'une quelconque des revendications précédentes, dans lequel le processeur est de plus conçu, avant de déterminer le type de contenu, pour :
déterminer (64) si au moins une partie de l'URI se trouve ou non sur une liste prédéterminée ; et
s'il est déterminé qu'au moins une partie de l'URI se trouve sur la liste prédéterminée, effectuer une action de mémorisation du premier type.

6. Système selon l'une quelconque des revendications précédentes, dans lequel l'au moins un dispositif comporte un identifiant unique, et dans lequel le processeur est de plus conçu pour mémoriser l'identifiant unique lors de l'action de mémorisation du premier type et de l'action de mémorisation du deuxième type.

7. Procédé de mémorisation d'une information concernant des communications avec au moins un dispositif (10, 20, 30) sur un réseau ; le procédé comprenant les étapes consistant en :
l'interception d'une communication avec l'au moins un dispositif ;
la détermination (66) du type de contenu qui est référencé par la communication interceptée à l'aide d'une extension de fichier d'une ressource, qui est référencée par un indicateur de ressource universel, URI, inclus dans la communication interceptée ; et
la réalisation d'une action de mémorisation d'un premier type lorsque le type de contenu déterminé est une impression de page, l'action de mémorisation du premier type comprenant la mémorisation (68) d'au moins une partie de la communication interceptée ; et
la réalisation d'une action de mémorisation d'un deuxième type différent du premier type lorsque le type de contenu déterminé n'est pas une impression de page, l'action de mémorisation du deuxième type comprenant l'incrémentation (70) d'un compte du nombre de communications interceptées.

8. Procédé selon la revendication 7, dans lequel l'action de mémorisation du premier type comprend la mémorisation d'au moins une partie de l'URI et l'action de mémorisation du deuxième type comprend l'incrémentation d'un compte du nombre de transactions interceptées associées à un domaine référencé dans l'URI.

9. Procédé selon la revendication 7 ou 8, dans lequel l'action de mémorisation du deuxième type comprend l'incrémentation d'un compte du nombre de communications interceptées du type de contenu déterminé.

10. Procédé selon l'une quelconque des revendications 7 à 9, dans lequel, si le type de contenu déterminé est une image, une audio, une vidéo, une publicité ou une demande de recherche, le type de contenu déterminé n'est pas une impression de page, et une action de mémorisation du deuxième type est effectuée.

11. Procédé selon l'une quelconque des revendications 7 à 10, où le procédé comprend de plus, avant la détermination du type de contenu, les étapes consistant en :
la détermination (64) du fait qu'au moins une partie de l'URI se trouve ou non sur une liste prédéterminée ; et
s'il est déterminé qu'au moins une partie de l'URI se trouve sur la liste prédéterminée, la réalisation d'une action de mémorisation du premier type.

12. Procédé selon l'une quelconque des revendications 7 à 11, dans lequel l'au moins un dispositif comporte un identifiant unique, le procédé comprenant de plus la mémorisation de l'identifiant unique lors de l'action de mémorisation du premier type et de l'action de mémorisation du deuxième type.

13. Produit de programme informatique comportant un code de programme informatique pour exécution par un système de traitement incorporé sur celui-ci, dans lequel le code de programme informatique, lorsqu'il est exécuté par le système de traitement, agit de façon à amener le système de traitement à exécuter le procédé selon l'une quelconque des revendications 7 à 12.
